# EUROPEAN PATENT SPECIFICATION

(11) **EP 2 709 443 B1**
(45) Date of publication and mention of the grant of the patent: **22.11.2017**
(21) Application number: 12724778.1
(22) Date of filing: 18.05.2012
(51) Int. Cl.: G01S 1/68, A01K 29/00, G01S 5/00

(54) **SYSTEM FOR OBSERVING ANIMALS**
SYSTEM ZUR BETRACHTUNG VON TIEREN
SYSTÈME D'OBSERVATION D'ANIMAUX

(30) Priority: 17.05.2011 NL 2006796
(43) Date of publication of application: 26.03.2014
(73) Proprietor: N.V. Nederlandsche Apparatenfabriek NEDAP, 7141 DC Groenlo (NL)
(72) Inventor: ROOSENBOOM, Derk Jan, NL-7481 EK Haaksbergen (NL)
(74) Representative: V.O.
(86) International application number: PCT/NL2012/050351
(87) International publication number: WO 2012/158040

(56) References cited:
- EP-A1- 2 000 023
- WO-A1-2008/156416
- US-A1- 2009 058 730

## Description

The invention relates to a system for observing animals, including at least one mobile identification unit which is configured to be worn by an animal, wherein the identification unit at least includes a memory, an on/off-switchable first-type transmitter unit for transmitting a radio wave for transmitting data, a first-type receiver unit, and a control circuit connected with the memory, the first-type receiver unit and the first-type transmitter unit, wherein the first-type receiver unit includes a resonant circuit which responds when it is introduced into an electromagnetic interrogation field, wherein the identification unit is configured such that the first-type transmitter unit can be activated for transmitting data when the first-type receiver unit responds when it is introduced into the interrogation field, wherein the system further includes at least one second-type receiver unit for receiving the radio wave which is transmitted with the first-type transmitter unit.

Such a system is known per se from EP 2000023 A1.

In the known system, in use, the mobile identification unit is attached to the animal. The identification unit is configured to store information related to the movements of the animal. When the identification unit is near a trigger transmitter which transmits a trigger signal which is received by the first-type receiver unit of the identification unit, the identification unit will, in response, switch on the first-type transmitter unit for transmitting a radio wave which is modulated with data relating to the detected movements. It may then be that the trigger signal can only be received at a relatively short distance, such as, e.g., 1 meter. The radio wave modulated with the data to be transmitted, by contrast, can be received over a much greater distance, such as, e.g., 100-200 meters.

Such as system is also known from WO 2008/156416. This known system comprises at least one tag unit adapted to be attached to a respective animal. The system further comprises at least one master station configured to transmit downlink messages, each message including information pertaining to an identity of the master station. The tag unit is configured to: receive the downlink message and to repeatedly transmit uplink messages pertaining to an identity of the tag unit (T1 , T2, T3, T4) from which the message is originated and information about the identity of the master station. The system also comprise at least one receiving station configured to receive the uplink data messages. The invention contemplates giving the known system much more functionality through relatively simple adaptations.

The invention is accordingly characterized in that the system further includes at least one reader unit configured to generate the interrogation field and to detect a response of the first-type receiver unit when it is in the interrogation field, wherein the reader unit is further configured to modulate the interrogation field with a transmission code, wherein the identification unit is configured for, in response to the reception of the transmission code with the aid of the first-type receiver unit, transmitting the radio wave with the first-type transmitter unit with a response code related to the received transmission code for receiving of the response code with the second-type receiver unit. By providing the system with a reader unit for generating the interrogation field, it is possible to send information from the reader unit via the identification unit over to the second-type receiver unit. The reader unit can have a much smaller range than the first-type transmitter unit. This makes it possible with the aid of the second-type receiver unit to detect at a relatively great distance that the mobile identification unit is located in the vicinity of the reader unit. As the transmission code is related to the response code, it is even possible to determine on the basis of the transmission code that the identification unit is located near the reader unit. Thus, at a relatively great distance, it can be established that the first-type receiver unit is near the reader unit. When it is known where the reader unit is set up, it is thereby possible to determine where the first-type receiver unit is located at any particular time. Another application is that it is possible in this manner to transmit information from the reader unit, which has a relatively short range, via the identification unit to the second-type receiver unit when the first-type receiver unit is in the vicinity of the reader unit. In particular when the response code is equal to the transmission code, information from the reader unit may be supplied directly to the second-type receiver unit via the identification unit. Furthermore, it is also possible to read out information from the identification unit with the reader unit.

In particular, it holds that the system includes a plurality of reader units, wherein each reader unit transmits a transmission code which corresponds to an identification code of the respective reader unit. The identification unit is here preferably configured such that upon receiving mutually different transmission codes, mutually different response codes are transmitted with the first-type transmitter unit. In other words, the identification unit is configured such that upon receiving a first transmission code a first response is transmitted and upon receiving a second transmission code a second response code is transmitted, the first response code differing from the second response code if the first transmission code differs from the second transmission code. In this manner, a locating system for the identification unit has been realized. For when a particular response code is received with the second-type receiver unit, then, when it is predetermined which response code belongs to which transmission code, it can be determined which reader unit has transmitted the corresponding transmission code. At that moment, it is also known in the vicinity of which reader unit the identification unit was located when the respective transmission code was received by the identification unit. When it is additionally known in what positions the respective reader units are set up, it is also possible in this manner to determine where the respective identification unit is located when it receives a transmission code from a reader unit.

A very practical application concerns the farm. The reader units can be set up at specific points such as an entrance to a milking robot, an entrance to a feeding position, an entrance to a bedded area, etc. When, for example, the animal passes the entrance to a bedded area, the identification unit worn by the animal will receive the transmission code transmitted by the reader unit set up at the respective entrance to the bedded area. The reader unit transmits a transmission code that is unique to the reader unit and can be seen as an identification code of the reader unit. This transmission code is received by the first-type receiver unit of the identification unit. The identification unit thereupon causes the radio wave to be transmitted with a response code which is, for example, equal to the received transmission code. On the farm, the second-type receiver unit is set up, for example, centrally. This second-type receiver unit can receive the radio wave with the response code. On the basis of the response code it can then be established near which reader unit the animal is present. When the response code is transmitted by the identification unit, simultaneously, an identification code stored in the identification unit that relates to the respective animal may be transmitted. Also, with the radio wave, further information may be transmitted relating to movements of the animal detected by the identification unit if the identification unit is configured for that purpose.

Preferably, it holds that the response code and possibly other information to be transmitted, such as the identification code of the identification unit and/or information about movements of the identification unit detected with the identification unit, is modulated on a carrier of the radio signal that is transmitted by the first-type transmitter unit. Further, preferably, it holds that the control circuit is configured to switch on the first-type transmitter unit for transmitting the response code and possibly any other information as mentioned. Preferably, it holds that the control circuit is configured to switch the first-type transmitter unit off again after transmitting the response code and any other information as mentioned. In this manner, energy can be saved. In particular, it holds that the first-type receiver unit is a passive receiver unit which draws the energy for its operation from the interrogation field. For this purpose, the first-type receiver unit includes a resonant circuit. In particular, it holds that the system further includes a control unit which is connected with the second receiver unit, wherein the control unit is configured to determine on the basis of a response code received with the second receiver unit, with which reader unit the transmission code has been transmitted that corresponds with the received response code. To this end, the control unit may be provided with information about the respective positions where the respective reader units are situated, while the control unit is furthermore configured to output (e.g., on a display) and/or store information about the position of the reader unit that transmitted a transmission code that belongs to a response code received by the second receiver unit. Also, information can then be output and/or stored about an associated identification code of the identification unit received by the second receiver unit and/or the time at which the response code was received. In this manner, the animal's movement behavior may be stored and possibly analyzed later.

In particular, it holds that the identification unit further includes a movement sensor for detecting movements of the identification unit. Here, it may hold in particular that the identification unit, more particularly the control circuit, is configured to store information about movements detected with the aid of the movement sensor in the memory of the identification unit. The identification unit may be configured to transmit information about detected movements stored in the memory, with the first-type transmitter unit. In particular, such transmitting is done in response to the reception of the transmission code by the first-type receiver. The respective information about the detected movement can then be transmitted together with the response code and any identification code (of the animal) stored in the identification unit. The identification unit may also be configured to transmit the stored information about registered movements of the animal not only when a transmission code is received but also, and/or instead, at other times, as is described in Dutch patent application "Method and device for monitoring animals", application number 2006598, filed on 13 April 2011.

In particular, it holds further that the control circuit is also of on/off-switchable design. The identification unit may be configured such that the control circuit is switched on upon reception of the transmission code with the aid of the first-type receiver unit. The control circuit may be switched off again after transmission of the response code and any other information. In this manner, energy can be saved.

US 2009/0058730 discloses a system comprising a beacon a tag and a reader. It is not disclosed that the beacon can also function as a reader for generating an interrogation field and for detecting a response of the first-type receiver unit when it is in the interrogation field

The invention will be further elucidated with reference to the drawing, in which:

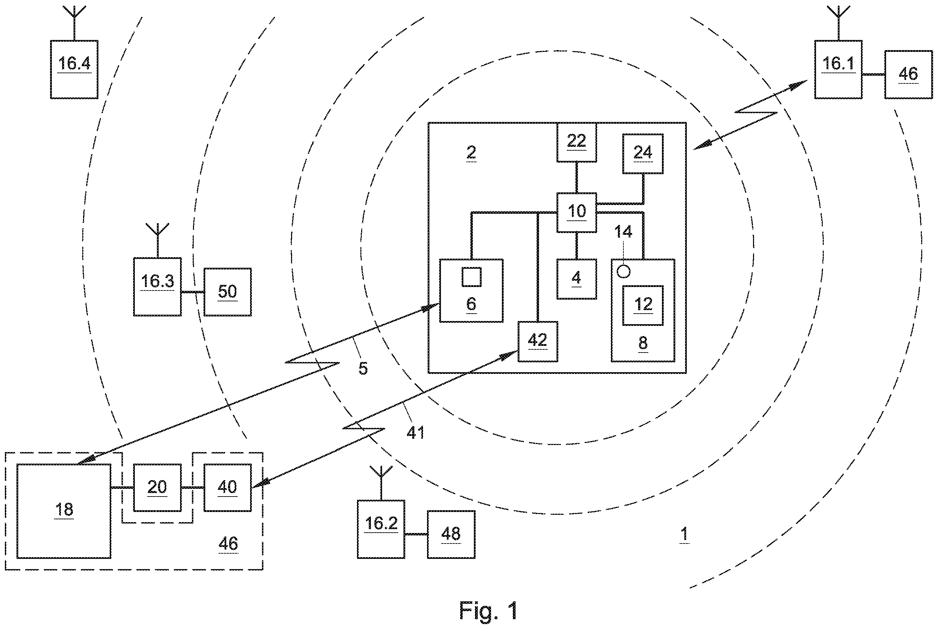

Fig. 1 shows a possible embodiment of a system according to the invention.

In Fig. 1 a system according to the invention is denoted with reference numeral 1. The system includes at least one mobile identification unit 2. The identification unit 2 includes a memory 4 (such as CMOS, a flash memory, etc.), an on/off-switchable first-type transmitter unit 6 for transmitting a radio wave 5 which can be modulated with data to be transmitted, a first-type receiver unit 8, and a control circuit 10 connected with the memory 4, the first-type receiver unit 8 and the first-type transmitter unit 6.

The first-type receiver unit 8 includes a resonant circuit 12 which responds when it is introduced into an electromagnetic interrogation field. The first receiver unit furthermore includes a rectifier 14, connected with the resonant circuit 12, for drawing energy from the electromagnetic interrogation field. The first-type receiver unit may be implemented, for instance, as an RFID label, known per se, which responds by modulating the interrogation field with an identification code which is stored in the first receiver unit. The memory in this example is implemented as a flash memory. The system further includes a plurality of reader units 16.i (i=1,2,3,4) which are each configured for generating the respective interrogation field. Also, these reader units are configured for detecting a response from the first-type receiver unit when located in the interrogation field. In this example, each of the reader units 16.i radiates an interrogation field with a carrier frequency having a magnitude of, e.g., 10kHz-300MHz. Each reader unit is configured to detect an RFID code transmitted by the receiver unit 8, which, in this example, is implemented as an RFID label. In this example, it holds that each reader unit has a range of about 1 meter. This means that the presence of an identification unit can be detected by a reader unit 16.i (by detection of a response of the first-type receiver unit 8 of the respective identification unit) only when the identification unit 2 is at a distance of less than 1 meter from the respective reader unit 16.i. Obviously, this is merely an example of a possible relatively small detection range of a reader unit 16.i. Other ranges are also possible, such as, e.g., a range of 0.5 meters.

The identification unit 2 is furthermore configured such that the first-type transmitter unit 6 can be activated for transmitting data, while the first-type receiver unit 8 responds as discussed above, when it is introduced into the interrogation field of one of the reader units 16.i. The system also includes at least one second-type receiver unit 18 for receiving the radio wave transmitted with the first-type transmitter unit.

In this example the radio wave has a carrier frequency which is in the range of 300 MHz - 5 GHz. More particularly, it holds in this example that the carrier frequency is a frequency which is between 1.5 - 3 GHz and/or that the carrier frequency of the carrier is in the UHF band. The first-type transmitter unit 6 is configured so as to have a range of, in this example, 25-300 meters. More particularly, the range in this example is around 150 meters.

In this example it holds that each reader unit 16.i is configured to modulate the interrogation field generated by the respective reader unit with a transmission code. The identification unit 2 is configured for, in response to the reception of the transmission code with the aid of the first-type receiver unit, transmitting the radio wave with the aid of the first-type transmitter unit with a response code related to the transmission code. If thus the first-type receiver unit 8 is, for instance, as shown in the drawing, introduced into the interrogation field which is generated by the reader unit 16.i, while this reader unit transmits the transmission code, this transmission code will be received with the aid of the receiver unit 8. The receiver unit 8 forwards this transmission code to the control circuit 10. In the memory 4, in this example, a list of possible transmission codes to be received is stored. In the list, for each transmission code to be received, a response code associated with this transmission code is stored. All transmission codes to be used and response codes to be used are unique in this example. The control circuit 10 is configured such that a response code is selected that corresponds, via the list, with the received transmission code. The control circuit 10 feeds this response code to the first-type transmitter unit 6. It is also possible for the response code to be equal to the received transmission code in each case. The first-type transmitter unit 6 modulates the radio carrier with the response code and transmits it. The radio wave with the response code is received, in this example, with the aid of the second-type receiver unit 18 which is removed from the mobile identification unit at a relatively great distance, such as, e.g., 100 meters in this example.

First of all, it is noted that it is possible in this manner to transfer information from the reader unit 16.i via the identification unit 2 to the second-type receiver unit 18. In particular when, for instance, the response code is equal to the transmission code, in this manner information is transferred from the transmitter of the reader unit 16.i to the second-type receiver unit 18. If at the receiver end, i.e., at the second-type receiver unit 18, it is known to which reader unit a received response code is related via the list mentioned, it is at that moment also known at the second-type receiver unit that the mobile identification unit is near the reader unit 16.i, i.e., within a distance of 1 meter. In the drawing, it holds in this example that i=1. This can be simply accomplished as a result of each response code being equal to the transmission code. If the transmission code is a unique transmission code that belongs to the reader unit 16.1 and thus is, in fact, an identification code of the reader unit 16.1, it can be simply derived in this manner that when the respective response code belonging to the reader unit 16.1 is received, the identification unit is near this reader unit 16.1. Entirely analogously, a response code can be received that belongs to the transmission code of, e.g., the reader unit 16.4, when the identification unit is near the reader unit 16.4 at a distance of less than 1 meter. In this way, it can be established in a simple manner when the identification unit is in the vicinity of one of the reader units 16.i. When, in addition, the position of the reader units 16.i is predetermined and is known at the receiver end of the second-type receiver unit 18, in this way, likewise in a simple manner, a locating system has been obtained for the identification unit 2. In particular, it holds here that the system further includes a control unit 20 which is connected with the second receiver unit 18. The control unit 20 is configured to determine on the basis of a response code received with the second receiver unit by which reader unit the transmission code corresponding to the received response code has been transmitted. This may then, for instance, be displayed on a screen of the control unit 20. Also, this information is stored in the control unit 20 together with the time at which this information was obtained. In particular, it holds that the control unit is provided with information about the respective positions where the respective reader units are located. The control unit is, for example, configured to output, on the above-mentioned screen, information about the position of the reader unit that transmitted a transmission code that belongs to a response code received by the second receiver unit. Such a system may preferably be used on a farm. The mobile identification unit can then be worn by an animal. The reader units are set up at predetermined positions, such as, for example, at the entrance of a bedded area, at the entrance of an eating space, at a milking robot and at a feeding trough. When an animal then enters, for instance, the bedded area, while at the entrance of the bedded area the reader unit 16.1 has been placed, the identification unit 2 of the respective animal will, in response to the interrogation field transmitted by the reader unit 16.1, transmit the response code with the aid of the first-type transmitter unit 6. The second receiver unit is, for instance, set up centrally on the farm and can receive the radio wave modulated with the respective response code over a relatively great distance. The control unit may then be formed, for example, by a PC. Thus, it may be stored in the PC that, for example, at a particular time the identification unit 2 is located near the reader unit 16.1. The identification unit 2 may additionally, simultaneously with the transmission of a response code, transmit an identification code which is stored in the first-type receiver unit 8 and/or in the memory 4. Upon reception of this identification code with the second-type receiver unit, it is then also known which identification unit is involved and hence it is known which animal is involved. In this manner, it is known at the control unit 20 when a particular animal is located at a particular reader unit at a particular time. By storing this information each time when an animal is near one of the reader units, the animal can be followed and the walking behavior of the animal can be stored and possibly analyzed later. In this example, the reader units 16.i will also receive the identification code of the identification unit when the interrogation field is modulated by the first-type receiver unit of the identification unit. Presently, however, this presence information can be wirelessly be transferred over a great distance to a centrally located second control unit without the reader units being directly connected with the control unit 20.

In particular, it further holds that the identification unit further includes a movement sensor 22, such as, e.g., a G-sensor, compass and/or gyro, the movement sensor 22 being connected with the control circuit 10. The control circuit 10 is configured so as to store this information about movements registered with the aid of the movement sensor 22 in the memory 4. The identification unit 2 is furthermore configured to transmit the information about the detected movements stored in the memory, with the first-type transmitter unit 6. The identification unit in this example is configured such that in response to the reception of the transmission code of a reader unit, the information about detected movements of the identification unit, stored in the memory, is transmitted with the first-type transmitter unit. Preferably, this information is transmitted simultaneously with the transmission of the response code. More preferably, it holds, therefore, that when the identification unit is introduced into an interrogation field of a reader unit, such as the reader unit 16.1 in this example, the transmission code is received by the first-type receiver unit. In response, the control circuit 10 thereupon effects transmission, with the first-type transmitter unit 6, of a radio wave modulated with the response code, the information stored in the memory 4 about movements detected with the aid of the G-sensor 22, as well as the identification code of the identification unit which in this example is stored in the first-type receiver unit 8. Thus, when this radio wave is received with the aid of the second-type receiver unit, information is received about the identity of the animal associated with the respective identification unit, information about registered movements of the animal, as well as information about the animal's current position at that time. In particular, it holds that information about the detected movements stored in the memory 4 is deleted after this information has been transmitted a predetermined number of times with the first-type transmitter unit and/or when the respective information is older than a predetermined length of time.

In this example, it holds furthermore that the first-type transmitter unit is implemented as an on/off-switchable transmitter unit. The control circuit 10 is configured such that it switches on the first-type transmitter unit for transmitting the response code. Also, the control circuit 10 is configured to switch off the first-type transmitter unit again after transmission of the response code and any other information, such as movement information stored in the memory 4 and/or the identification code which, in this example, is stored in the first-type receiver unit 8. An advantage of this is that the identification unit consumes relatively little energy when no radio waves are transmitted with the first-type transmitter unit 6, since it is off then. This may be very advantageous because in this example the identification unit includes a battery 24 for the energy supply of the first-type transmitter unit 6, the memory 4, the sensor 22 and the control circuit 10. The battery is, for instance, of non-exchangeable design. This, in turn, provides the advantage that the identification unit can be included in a housing that cannot be opened and thus is resistant to moisture, dirt and shocks, which is advantageous when the identification unit is worn by an animal. Also, it holds in this example that the control circuit 10 is on/off-switchable. The identification unit is then configured such that the control circuit is switched on upon reception of the transmission code with the aid of the first-type receiver unit. As the first-type receiver unit is designed as a passive receiver unit, as known of an RFID label, it will always respond because it can draw its energy for its operation from the interrogation field. Furthermore, the identification unit is configured such that the control circuit is switched off again after transmission of the response code and possible other information with the aid of the transmitter unit 6. Also, the identification unit is configured such that when a movement of the animal is detected with the aid of the movement sensor 22, the control circuit is switched on again for recording the movements of the animal in the memory 4. If the control circuit is switched on when a movement of the animal is detected with the movement sensor, the control circuit will store information about movements detected with the movement sensor in the memory 4. Also, it is possible that the control circuit then causes information about detected movements and/or information about detected movements stored in the memory 4 to be transmitted with the first-type transmitter unit. In other words, when with the aid of the movement sensor 22 movements are detected, the control circuit 10 and the transmitter unit 6 are activated. A result of this is that at that moment the information about detected movements stored in the memory 4 together with the identification code stored in the receiver unit 8 is transmitted with the aid of the transmitter unit 6. After transmission of this information, the transmitter unit 6 and the control circuit 10 will be switched off again, as a result of which a minimal amount of energy is consumed. It thus holds that in this example the control circuit 10 and the transmitter unit 6 can be activated by the first-type receiver unit 8 when it is introduced into an interrogation field and by the movement sensor 22 when it detects a possibly predetermined type of movement.

The control circuit 10 may furthermore be so configured as to cause this information about movements stored in the memory 4 and detected with the movement sensor 22 to be transmitted with the aid of the first-type transmitter unit at other times as well. To this end, the control circuit 10 may be configured, for instance, as described in the Dutch patent application "Method and device for monitoring movements of an animal", application no. 2006598, filed 13 April 2011.

The mobile identification unit, as far as movement detection is concerned, may be of a design entirely analogous to that described in the above-mentioned patent application.

Also, it holds in this example that the system is so configured that the control circuit is switched off again, and hence also the first transmitter unit, when no movements are detected with the movement sensor anymore.

The invention is not in any way limited to the above-outlined embodiment. Thus, the identification code of the identification unit may also be stored in the memory 4. Also, the system may further include more than one second-type receiver unit 18, which, for instance, are set up at mutually different places on a farm.

Also, the system may further include a third-type transmitter unit 40 for transmitting a radio wave 41 with particular information Z. In that case, the identification unit 2 further includes a third-type receiver unit 42 for receiving information transmitted with the third-type transmitted unit 40. The information Z is, for instance, modulated on a carrier of the radio signal 41 transmitted by the third-type transmitter unit 40. The third-type receiver unit 42 in this example is connected with the control unit 20. In particular, the second-type receiver unit 18 and the third-type transmitter unit 40 in combination form a transceiver unit 46. The information Z received by the identification unit 2 can, for instance, be stored in the memory 4. It is also possible, however, that the identification unit 2 is configured to modulate the interrogation field of a reader unit in which it is located, with the aid of the first-type receiver unit 8, with information, in response to the information Z which has been received with the third-type receiver unit 42 and which comes from the third-type transmitter unit 40. The information Z may be generated, for example, by the control unit 20, for instance, in response to a received response code coming from the identification unit 2. If, for instance, on the basis of the response code received, it can be established that an animal wearing the identification unit is present at reader unit 16.1, while, near this reader unit 16.1, a feed station 46 is set up, the information Z can comprise, for instance, a command to activate the feed station 46. The identification unit then modulates, e.g., with the aid of its first-type receiver unit 8, the interrogation field transmitted with the reader unit 16.1 with control information based on the information Z received with the third-type receiver unit and/or with information comprising the information Z received with the third-type receiver unit. The control information with which the interrogation field of the reader unit 16.1 is modulated, may, for instance, be selected from a table stored in the identification unit 2, on the basis of the information Z received. Also, it is possible that the control information with which the interrogation field is modulated comprises the information Z itself. The reader unit 16.1 is, for instance, connected with the feed station 46 and, in response to the control information which has been received, controls the feed station 46 with the reader unit 16.1 to dispense a portion of feed to the respective animal. If, for instance, the reader unit 16.2 is set up adjacent a separation fence, in this manner also information from the control unit can be fed via the third-type transmitter unit 40 and the identification unit 2 to the reader unit 16.2 if the animal with the identification unit is present near the reader unit 16.2. The reader unit 16.2 can then, for instance, control the separation gate 48. Entirely analogously, the control unit 20 can control a milking robot 50 which is connected with the reader unit 16.3. In addition, the information Z may be supplemented with identification information indicating which identification unit 2 the information Z is intended for. Only when the identification information corresponds with an identification code stored in the respective identification unit 2 will this identification unit respond to the received information Z by modulating the respective interrogation field with corresponding control information. According to a special variant of the invention it is therefore possible to send information from a reader unit via an identification unit to the control unit 20, in particular for the purpose of locating the identification unit. Also, it is possible to send information, in particular control information, from the control unit via the respective identification unit to a reader unit, optionally in response to a received response code which corresponds to a transmission code transmitted by the respective reader unit.

In this example, the system has been discussed on the basis of a single identification unit. Practically, the system can comprise a plurality of identification units. Each identification unit may then be provided with its own unique identification code. Such variants are each understood to fall within the purview of the invention.

## Claims

1. A system for observing animals, including at least one mobile identification unit (2) which is configured to be worn by an animal, wherein the identification unit at least includes a memory (4), an on/off-switchable first-type transmitter unit (6) for transmitting a radio wave (5) for transmitting data, a first-type receiver unit (8), and a control circuit (10) connected with the memory, the first-type receiver unit (8) and the first-type transmitter unit (6), wherein the first-type receiver unit includes a resonant circuit (12) which responds when it is introduced into an electromagnetic interrogation field, wherein the identification unit is configured such that the first-type transmitter unit can be activated for transmitting data when the first-type receiver unit responds when it is introduced into the interrogation field, wherein the system further includes at least one second-type receiver unit (18) for receiving the radio wave which is transmitted with the first-type transmitter unit, **characterized in that** the system further includes at least one reader unit(16.i) configured to generate the interrogation field and to detect a response of the first-type receiver unit when it is in the interrogation field, wherein the reader unit is further configured to modulate the interrogation field with a transmission code, wherein the identification unit is further configured to, in response to the reception of the transmission code with the aid of the first-type receiver unit, transmit the radio wave with the first-type transmitter unit with a response code related to the received transmission code for receiving of the response code with the second-type receiver unit.

2. A system according to claim 1, **characterized in that** the response code and preferably any other information to be transmitted, is modulated on a carrier of the radio signal transmitted by the first-type transmitter unit (6).

3. A system according to claim 1 or 2, **characterized in that** the control circuit (10) is configured to switch on the first-type transmitter unit for transmitting the response code.

4. A system according to claim 3, **characterized in that** the control circuit (10) is configured to switch the first-type transmitter unit off again after transmission of the response code and any other information.

5. A system according to any one of the preceding claims, **characterized in that** the first-type receiver unit (6) is a passive receiver unit which draws the energy for its operation from the interrogation field, while in particular the first-type receiver unit is implemented as an RFID label.

6. A system according to any one of the preceding claims, **characterized in that** the control circuit (10) is of on/off-switchable design.

7. A system according to claim 6, **characterized in that** the identification unit (2) is configured to switch the control circuit (10) on upon reception of the transmission code with the aid of the first-type receiver unit (6).

8. A system according to claim 7, **characterized in that** the identification unit is configured to switch the control circuit (10) off again after transmission of the response code and any other information.

9. A system according to any one of the preceding claims, **characterized in that** the system includes a plurality of reader units (16.i), while each reader unit transmits a transmission code which corresponds to an identification code of the respective reader unit.

10. A system according to claim 9, **characterized in that** the identification unit (2)is configured such that upon receiving a first transmission code a first response is transmitted and upon receiving a second transmission code a second response code is transmitted, the first response code differing from the second response code if the first transmission code differs from the second transmission code.

11. A system according to claim 9 or 10, **characterized in that** the system further includes a control unit (20) which is connected with the second receiver unit (18), wherein the control unit is configured to determine on the basis of a response code received with the second receiver unit by which reader unit the transmission code has been transmitted that belongs to the received response code.

12. A system according to claim 11, **characterized in that** the control unit (20) is provided with information about the respective positions where the respective reader units are situated, wherein the control unit is furthermore configured to output information about the position or identification code of the reader unit (16.i) that transmitted a transmission code that corresponds to a response code received by the second receiver unit.

13. A system according to any one of the preceding claims 10-12, **characterized in that** in the memory (4) a list of possible transmission codes to be received is stored, while in the list, for each transmission code, a response code associated with this transmission code is stored, while the control circuit is configured such that a response code is transmitted which has been associated, via the list, with a received transmission code.

14. A system according to any one of the preceding claims 1-12, **characterized in that** the control circuit (10) is configured to arrange that the response code which is transmitted by an identification unit (2) with the first-type transmitter unit in response to the reception of the transmission code is equal to the transmission code received with the first-type receiver unit.

15. A system according to any one of the preceding claims, **characterized in that** the identification unit (2) further includes a movement sensor (22) for detecting movements of the identification unit.

16. A system according to claim 15, **characterized in that** the identification unit (2), more particularly the control circuit (10), is configured to store information about movements detected with the aid of the movement sensor (22) in the memory 4).

17. A system according to claim 16, **characterized in that** the identification unit (2) is configured to transmit the information about detected movements stored in the memory (4) with the first-type transmitter unit.

18. A system according to claim 17, **characterized in that** the identification unit (2) is configured for, at least in response to the reception of the transmission code by the first-type receiver unit (8), transmitting the information about detected movements stored in the memory, with the first-type transmitter unit (6).

19. A system according to claim 18, **characterized in that** the information about the detected movements is transmitted together with the response code.

20. A system according to any one of claims 17-19, **characterized in that** the system is configured such that the first-type transmitter unit (6)is switched off again after transmitting the information about the detected movements stored in the memory (4) and/or the response code.

21. A system according to any one of the preceding claims 17-20, **characterized in that** the system is configured to delete the information about the detected movements stored in the memory (4) after this information has been transmitted with the first-type transmitter unit a predetermined number of times and/or when the stored information is older than a predetermined length of time.

22. A system according to any one of the preceding claims 17-21, **characterized in that** the system is configured such that the control circuit (10) is switched on when a movement is detected with the sensor.

23. A system according to claim 22, **characterized in that** the control circuit (10) is configured for, when it is activated by the movement sensor (22), storing information about movements detected with the sensor in the memory and/or transmitting information about detected movements and/or information about detected movements stored in the memory, with the first-type transmitter unit (6).

24. A system according to claim 23, **characterized in that** the system is configured such that the control circuit (10) is switched off again when no movements are detected with the movement sensor anymore.

25. A system according to any one of the preceding claims, **characterized in that** the identification unit (2) includes a battery (24) for the energy supply of the control circuit (10) and the first-type transmitter unit (6) and possibly the sensor of claim 15.

26. A system according to any one of the preceding claims, **characterized in that** the first-type transmitter unit (6) and the second-type receiver unit (18) are configured to communicate with each other over a distance that is greater than the distance over which the at least one reader unit and the first-type receiver unit are configured to communicate with each other.

27. A system according to any one of the preceding claims, **characterized in that** the memory (4) is implemented as a flash memory or CMOS.

28. A system according to any one of the preceding claims, **characterized in that** the identification unit (2) is configured to transmit, optionally together with the response code, an identification code stored in the memory (4) and/or in the first-type receiver unit (8), with the first-type transmitter unit (6).

29. A system according to any one of the preceding claims, **characterized in that** the identification unit (2) is configured to modulate the interrogation field with information, such as an identification code of the identification unit, while the at least one reader unit is configured to receive this information.

30. A system according to any one of the preceding claims, **characterized in that** the system (1) includes a third-type transmitter unit (40) for transmitting a radio wave with information, while the identification unit includes a third-type receiver unit (42) for receiving information transmitted with the third-type transmitter unit.

31. A system according to claim 30, **characterized in that** the information is modulated by the third-type transmitter unit (40) on a carrier of the radio signal which is transmitted by the third-type transmitter unit.

32. A system according to claim 30 or 31 and according to claim 29, **characterized in that** the identification unit (2) is configured to modulate the interrogation field with the aid of the first-type receiver unit (8) with information in response to the information which has been received with the third-type receiver unit (42) and which comes from the third-type transmitter unit (44).

33. A system according to claim 32, **characterized in that** the identification unit (2) modulates the interrogation field with information which is based on the information received with the third-type receiver unit (42) and/or which comprises the information received with the third-type receiver unit.

34. A system according to any one of the preceding claims 1-29, **characterized in that** the radio wave has a carrier frequency of 300 MHz - 5 GHz, more preferably a carrier frequency of 1.5 - 3 GHz and/or that the carrier frequency of the carrier is in the UHF band.

35. A system according to any one of the preceding claims 30-33, **characterized in that** the radio wave has a carrier frequency of 300 MHz - 5 GHz, more preferably a carrier frequency of 1.5 - 3 GHz and/or that the carrier frequency of the carrier is in the UHF band.

36. A system according to any one of the preceding claims, **characterized in that** the interrogation field has a carrier frequency of 10 kHz - 300 MHz.

## Patentansprüche

1. System zur Beobachtung von Tieren, umfassend mindestens eine mobile Identifikationseinheit (2), die konfiguriert ist, um von einem Tier getragen zu werden, wobei die Identifikationseinheit mindestens einen Speicher (4), eine ein-/ausschaltbare Sendeeinheit eines ersten Typs (6) zum Senden einer Funkwelle (5) zum Senden von Daten, eine Empfangseinheit eines ersten Typs (8) und eine Steuereinheit (10) verbunden mit dem Speicher, der Empfangseinheit vom ersten Typ (8) und der Sendeeinheit vom ersten Typ (6), umfasst, wobei die Empfangseinheit vom ersten Typ einen Resonanzkreis (12) umfasst, der antwortet, wenn er in ein elektromagnetisches Abfragefeld eingeführt wird, wobei die Identifikationseinheit so konfiguriert ist, dass die Sendeeinheit vom ersten Typ zum Senden von Daten aktiviert werden kann, wenn die Empfangseinheit vom ersten Typ antwortet, wenn sie in das Abfragefeld eingeführt wird, wobei das System ferner mindestens eine Empfangseinheit eines zweiten Typs (18) zum Empfangen der Funkwelle, die mit der Sendeeinheit vom ersten Typ gesendet wird, umfasst **dadurch gekennzeichnet, dass** das System ferner mindestens eine Leseeinheit (16.i) umfasst, konfiguriert zum Erzeugen des Abfragefeldes und zum Erkennen einer Antwort der Empfangseinheit vom ersten Typ, wenn sie in dem Abfragefeld ist, wobei die Leseeinheit ferner konfiguriert ist, das Abfragefeld mit einem Sendecode zu modulieren, wobei de Identifikationseinheit ferner konfiguriert ist, um als Antwort auf den Empfang des Sendecodes mithilfe der Empfangseinheit vom ersten Typ die Funkwelle mit der Sendeeinheit vom ersten Typ mit einem Antwortcode, bezogen auf den empfangenen Sendecode, zu senden, um den Antwortcode mit der Empfangseinheit vom zweiten Typ zu empfangen.

2. System nach Anspruch 1, **dadurch gekennzeichnet, dass** der Antwortcode und bevorzugt jede andere zu sendende Information auf einem Träger des von der Sendeeinheit vom ersten Typ (6) gesendeten Funksignals moduliert wird.

3. System nach Anspruch 1 oder 2, **dadurch gekennzeichnet, dass** der Steuerkreis (10) konfiguriert ist, die Sendeeinheit vom ersten Typ zum Senden des Antwortcodes einzuschalten.

4. System nach Anspruch 3, **dadurch gekennzeichnet, dass** der Steuerkreis (10) konfiguriert ist, die Sendeeinheit vom ersten Typ nach dem Senden des Antwortcodes und jeder anderen Information wieder auszuschalten.

5. System nach einem der vorhergehenden Ansprüche, **dadurch gekennzeichnet, dass** die Empfangseinheit vom ersten Typ (6) eine passive Empfangseinheit ist, die die Energie für ihren Betrieb von dem Abfragefeld bezieht, während insbesondere die Empfangseinheit vom ersten Typ als ein RFID-Label implementiert ist.

6. System nach einem der vorhergehenden Ansprüche, **dadurch gekennzeichnet, dass** der Steuerkreis (10) ein-/ausschaltbar konzipiert ist.

7. System nach Anspruch 6, **dadurch gekennzeichnet, dass** die Identifikationseinheit (2) konfiguriert ist, den Steuerkreis (10) einzuschalten, wenn der Sendecode mithilfe der Empfangseinheit vom ersten Typ (6) empfangen wird.

8. System nach Anspruch 7, **dadurch gekennzeichnet, dass** die Identifikationseinheit konfiguriert ist, den Steuerkreis (10) nach dem Senden des Antwortcodes und jeder anderen Information wieder auszuschalten.

9. System nach einem der vorhergehenden Ansprüche, **dadurch gekennzeichnet, dass** das System eine Vielzahl von Leseeinheiten (16.i) umfasst, während jede Leseeinheit einen Sendecode überträgt, der einem Identifikationscode der jeweiligen Leseeinheit entspricht.

10. System nach Anspruch 9, **dadurch gekennzeichnet, dass** die Identifikationseinheit (2) so konfiguriert ist, dass beim Empfangen eines ersten Sendecodes eine erste Antwort gesendet wird und beim Empfangen eines zweiten Sendecodes eine zweite Antwort gesendet wird, welcher erste Antwortcode sich von dem zweiten Antwortcode unterscheidet, wenn der erste Sendecode sich von dem zweiten Sendecode unterscheidet.

11. System nach Anspruch 9 oder 10, **dadurch gekennzeichnet, dass** das System ferner eine Steuereinheit (20) umfasst, die mit der zweiten Empfangseinheit (18) verbunden ist, wobei die Steuereinheit konfiguriert ist, um auf der Basis eines mit der zweiten Empfangseinheit empfangenen Antwortcodes zu bestimmen, von welcher Leseeinheit der Sendecode, der zu dem empfangenen Antwortcode gehört, gesendet wurde.

12. System nach Anspruch 11, **dadurch gekennzeichnet, dass** die Steuereinheit (20) mit Information über die jeweiligen Positionen, wo sich die jeweiligen Leseeinheiten befinden, versehen ist, wobei die Steuereinheit ferner konfiguriert ist, Information über die Position oder den Identifikationscode der Leseeinheit (16.i), die einen Sendecode gesendet hat, der einem von der zweiten Empfangseinheit empfangenen Antwortcode entspricht, auszugeben.

13. System nach einem der vorhergehenden Ansprüche 10-12, **dadurch gekennzeichnet, dass** in dem Speicher (4) eine Liste möglicher zu empfangender Sendecodes gespeichert ist, während in der Liste für jeden Sendecode ein Antwortcode, assoziiert mit diesem Sendecode, gespeichert ist, während die Steuereinheit so konfiguriert ist, dass ein Antwortcode gesendet wird, der über die Liste mit einem empfangenen Sendecode assoziiert ist.

14. System nach einem der vorhergehenden Ansprüche 1-12, **dadurch gekennzeichnet, dass** die Steuereinheit (10) konfiguriert ist, anzuordnen, dass der Antwortcode, der von einer Identifikationseinheit (2) mit der Sendeeinheit vom Ersten Typ als Antwort auf den Empfang des Sendecodes gesendet wird, gleich dem Sendecode ist, empfangen mit der Empfangseinheit vom ersten Typ.

15. System nach einem der vorhergehenden Ansprüche, **dadurch gekennzeichnet, dass** die Identifikationseinheit (2) ferner einen Bewegungssensor (22) zum Erkennen von Bewegungen der Identifikationseinheit umfasst.

16. System nach Anspruch 15, **dadurch gekennzeichnet, dass** die Identifikationseinheit (2), insbesondere die Steuereinheit (10), konfiguriert ist, Information über Bewegungen, erkannt mithilfe des Bewegungssensors (22) in dem Speicher (4), zu speichern.

17. System nach Anspruch 16, **dadurch gekennzeichnet, dass** die Identifikationseinheit (2) konfiguriert ist, die Information über erkannte Bewegungen, gespeichert in dem Speicher (4), mit der Sendeeinheit vom ersten Typ zu senden.

18. System nach Anspruch 17, **dadurch gekennzeichnet, dass** die Identifikationseinheit (2) konfiguriert ist, mindestens als Antwort auf den Empfang des Sendecodes durch die Empfangseinheit vom ersten Typ (8), die Information über erkannte Bewegungen, gespeichert in dem Speicher, mit der Sendeeinheit vom ersten Typ (6) zu senden.

19. System nach Anspruch 18, **dadurch gekennzeichnet, dass** die Information über die erkannten Bewegungen zusammen mit dem Antwortcode gesendet wird.

20. System nach einem der Ansprüche 17-19, **dadurch gekennzeichnet, dass** das System so konfiguriert ist, dass die Empfangseinheit vom ersten Typ (6) nach dem Senden der Information über die erkannten Bewegungen, gespeichert in dem Speicher (4), und/oder des Antwortcodes wieder auszuschalten.

21. System nach einem der vorhergehenden Ansprüche 17-20, **dadurch gekennzeichnet, dass** das System konfiguriert ist, die Information über die erkannten Bewegungen, gespeichert in dem Speicher (4), zu löschen, nachdem diese Information mit der Sendeeinheit vom ersten Typ eine vorbestimmte Anzahl von Malen gesendet wurde und/oder wenn die gespeicherte Information älter als eine vorbestimmte Zeitdauer ist.

22. System nach einem der vorhergehenden Ansprüche 17-21, **dadurch gekennzeichnet, dass** das System so konfiguriert ist, dass die Steuereinheit (10) eingeschaltet wird, wenn eine Bewegung mit dem Sensor erkannt wird.

23. System nach Anspruch 22, **dadurch gekennzeichnet, dass** der Steuerkreis (10) konfiguriert ist, um, wenn er von dem Bewegungssensor (22) aktiviert wird, Information über Bewegungen, erkannt mit dem Sensor, in dem Speicher zu speichern und/oder Information über erkannte Bewegungen und/oder Information über erkannte Bewegungen, gespeichert in dem Speicher, mit der Sendeeinheit vom ersten Typ (6) zu senden.

24. System nach Anspruch 23, **dadurch gekennzeichnet, dass** das System so konfiguriert ist, dass der Steuerkreis (10) wieder ausgeschaltet wird, wenn mit dem Bewegungssensor keine Bewegungen mehr erkannt werden.

25. System nach einem der vorhergehenden Ansprüche, **dadurch gekennzeichnet, dass** die Identifikationseinheit (2) eine Batterie (24) für die Energieversorgung des Steuerkreises (10) und der Sendeeinheit vom ersten Typ (6) und eventuell des Sensors von Anspruch 15 umfasst.

26. System nach einem der vorhergehenden Ansprüche, **dadurch gekennzeichnet, dass** die Sendeeinheit vom ersten Typ (6) und die Empfangseinheit vom zweiten Typ (18) konfiguriert sind, miteinander über eine Entfernung zu kommunizieren, die größer ist als die Entfernung, über die die mindestens eine Leseeinheit und die Empfangseinheit vom ersten Typ konfiguriert sind, miteinander zu kommunizieren.

27. System nach einem der vorhergehenden Ansprüche, **dadurch gekennzeichnet, dass** der Speicher (4) als ein Flash-Speicher oder CMOS implementiert ist.

28. System nach einem der vorhergehenden Ansprüche, **dadurch gekennzeichnet, dass** die Identifikationseinheit (2) konfiguriert ist, um, optional zusammen mit dem Antwortcode, einen Identifikationscode, gespeichert in dem Speicher (4) und/oder in der Empfangseinheit vom ersten Typ (8), mit der Sendeeinheit vom ersten Typ (6) zu senden.

29. System nach einem der vorhergehenden Ansprüche, **dadurch gekennzeichnet, dass** die Identifikationseinheit (2) konfiguriert ist, das Abfragefeld mit Information, wie etwa einem Identifikationscode der Identifikationseinheit, zu modulieren, während die mindestens eine Leseeinheit zum Empfangen dieser Information konfiguriert ist.

30. System nach einem der vorhergehenden Ansprüche, **dadurch gekennzeichnet, dass** das System (1) eine Sendeeinheit vom dritten Typ (40) umfasst, um eine Funkwelle mit Information zu senden, während die Identifikationseinheit eine Empfangseinheit vom dritten Typ (42) umfasst, um Information, gesendet mit der Sendeeinheit vom dritten Typ, zu empfangen.

31. System nach Anspruch 30, **dadurch gekennzeichnet, dass** die Information von der Sendeeinheit vom dritten Typ (40) auf einem Träger des Funksignals, das von der Sendeeinheit vom dritten Typ gesendet wird, moduliert wird.

32. System nach Anspruch 30 oder 31 und nach Anspruch 29, **dadurch gekennzeichnet, dass** die Identifikationseinheit (2) konfiguriert ist, das Abfragefeld mithilfe der Empfangseinheit vom ersten Typ (8) mit Information als Antwort auf die Information, die mit der Empfangseinheit vom dritten Typ (42) empfangen wurde und die von der Sendeeinheit vom dritten Typ (44) kommt, zu modulieren.

33. System nach Anspruch 32, **dadurch gekennzeichnet, dass** die Identifikationseinheit (2) das Abfragefeld mit Information moduliert, die auf der Information basiert, die mit der Empfangseinheit vom dritten Typ (42) empfangen wurde und/oder die Information, empfangen mit der Empfangseinheit vom dritten Typ, umfasst.

34. System nach einem der vorhergehenden Ansprüche 1-29, **dadurch gekennzeichnet, dass** die Funkwelle eine Trägerfrequenz von 300 MHz - 5 GHz, bevorzugter eine Trägerfrequenz von 1,5 - 3 GHz hat und/oder dass die Trägerfrequenz des Trägers im UHF-Band ist.

35. System nach einem der vorhergehenden Ansprüche 30-33, **dadurch gekennzeichnet, dass** die Funkwelle eine Trägerfrequenz von 300 MHz - 5 GHz, bevorzugter eine Trägerfrequenz von 1,5 - 3 GHz hat und/oder dass die Trägerfrequenz des Trägers im UHF-Band ist.

36. System nach einem der vorhergehenden Ansprüche, **dadurch gekennzeichnet, dass** das Abfragefeld eine Trägerfrequenz von 10 kHz - 300 MHz hat.

## Revendications

1. Système d'observation d'animaux, incluant au moins une unité d'identification mobile (2) qui est configurée pour être portée par un animal, dans lequel l'unité d'identification inclut au moins une mémoire (4), une unité d'émetteur d'un premier type (6) commutable marche/arrêt pour émettre une onde radio (5) pour transmettre des données, une unité de récepteur (8) du premier type, et un circuit de commande (10) connecté à la mémoire, à l'unité de récepteur (8) du premier type et à l'unité d'émetteur du premier type (6), dans lequel l'unité de récepteur du premier type inclut un circuit résonant (12) qui répond quand il est introduit dans un champ d'interrogation électromagnétique, dans lequel l'unité d'identification est configurée de telle manière que l'unité d'émetteur du premier type peut être activée pour transmettre des données quand l'unité de récepteur du premier type répond quand elle est introduite dans le champ d'interrogation, dans lequel le système inclut en outre au moins une unité de récepteur (18) du second type pour recevoir l'onde radio qui est émise avec unité d'émetteur du premier type, **caractérisé en ce que** le système inclut en outre au moins une unité de lecteur (16.i) configurée pour générer le champ d'interrogation et pour détecter une réponse de l'unité de récepteur du premier type quand elle est dans le champ d'interrogation, dans lequel l'unité de lecteur est en outre configurée pour moduler le champ d'interrogation avec un code de transmission, dans lequel l'unité d'identification est en outre configurée pour, en réponse à la réception du code de transmission avec l'aide de l'unité de récepteur du premier type, émet l'onde radio avec l'unité d'émetteur du premier type avec un code de réponse lié au code de transmission reçu pour recevoir le code de réponse avec l'unité de récepteur du second type.

2. Système selon la revendication 1, **caractérisé en ce que** le code de réponse et de préférence toute autre information à transmettre, sont modulés sur une porteuse du signal radio émis par l'unité d'émetteur du premier type (6).

3. Système selon la revendication 1 ou 2, **caractérisé en ce que** le circuit de commande (10) est configuré pour allumer l'unité d'émetteur du premier type pour transmettre le code de réponse.

4. Système selon la revendication 3, **caractérisé en ce que** le circuit de commande (10) est configuré pour éteindre l'unité d'émetteur du premier type de nouveau après la transmission du code de réponse et de toute autre information.

5. Système selon l'une quelconque des revendications précédentes, **caractérisé en ce que** l'unité de récepteur du premier type (6) est une unité de récepteur passive qui tire l'énergie pour son fonctionnement du champ d'interrogation, alors qu'en particulier l'unité de récepteur du premier type est mise en oeuvre comme une étiquette RFID.

6. Système selon l'une quelconque des revendications précédentes, **caractérisé en ce que** le circuit de commande (10) est de conception marche/arrêt.

7. Système selon la revendication 6, **caractérisé en ce que** l'unité d'identification (2) est configurée pour allumer le circuit de commande (10) lors de la réception du code de transmission avec l'aide de l'unité de récepteur du premier type (6).

8. Système selon la revendication 7, **caractérisé en ce que** l'unité d'identification est configurée pour éteindre le circuit de commande (10) de nouveau après la transmission du code de réponse et de toute autre information.

9. Système selon l'une quelconque des revendications précédentes, **caractérisé en ce que** le système inclut une pluralité d'unités de lecteur (16.i), alors que chaque unité de lecture transmet un code de transmission qui correspond à un code d'identification de l'unité de lecteur respective.

10. Système selon la revendication 9, **caractérisé en ce que** l'unité d'identification (2) est configurée de telle manière que lors de la réception d'un premier code de transmission une première réponse est transmise et lors de la réception d'un second code de transmission un second code de réponse est transmis, le premier code de réponse différant du second code de réponse si le premier code de transmission diffère du second code de transmission.

11. Système selon la revendication 9 ou 10, **caractérisé en ce que** le système inclut en outre une unité de commande (20) qui est connectée avec la seconde unité de récepteur (18), dans lequel l'unité de commande est configurée pour déterminer en fonction d'un code de réponse reçu avec la seconde unité de récepteur par quelle unité de lecteur le code de transmission a été transmis qui appartient au code de réponse reçu.

12. Système selon la revendication 11, **caractérisé en ce que** l'unité de commande (20) dispose d'informations sur les positions respectives où les unités de lecteur respectives sont situées, dans lequel l'unité de commande est en outre configurée pour sortir des informations sur la position ou le code d'identification de l'unité de lecteur (16.i) qui ont transmis un code de transmission qui correspond à un code de réponse reçu par la seconde unité de récepteur.

13. Système selon l'une quelconque des revendications précédentes 10-12, **caractérisé en ce que** dans la mémoire (4) une liste de codes de transmission possibles pouvant être reçus est stockée, alors que dans la liste, pour chaque code de transmission, un code de réponse associé à ce code de transmission est stocké, alors que le circuit de commande est configuré de telle manière qu'un code de réponse est transmis qui a été associé, via la liste, à un code de transmission reçu.

14. Système selon l'une quelconque des revendications précédentes 1-12, **caractérisé en ce que** le circuit de commande (10) est configuré pour faire que le code de réponse qui est transmis par une unité d'identification (2) avec l'unité d'émetteur du premier type en réponse à la réception du code de transmission est égal au code de transmission reçu avec l'unité de récepteur du premier type.

15. Système selon l'une quelconque des revendications précédentes, **caractérisé en ce que** l'unité d'identification (2) inclut en outre un capteur de mouvement (22) pour détecter des mouvements de l'unité d'identification.

16. Système selon la revendication 15, **caractérisé en ce que** l'unité d'identification (2), plus particulièrement le circuit de commande (10), est configurée pour stocker des informations sur des mouvements détectés à l'aide du capteur de mouvement (22) dans la mémoire (4).

17. Système selon la revendication 16, **caractérisé en ce que** l'unité d'identification (2) est configurée pour transmettre l'information sur des mouvements détectés stockée dans la mémoire (4) avec l'unité d'émetteur du premier type.

18. Système selon la revendication 17, **caractérisé en ce que** l'unité d'identification (2) est configurée pour, au moins en réponse à la réception du code de transmission par l'unité de récepteur (8) du premier type, transmettre les informations sur des mouvements détectés stockées dans la mémoire, avec l'unité d'émetteur du premier type (6).

19. Système selon la revendication 18, **caractérisé en ce que** les informations sur les mouvements détectés sont transmises conjointement avec le code de réponse.

20. Système selon l'une quelconque des revendications 17-19, **caractérisé en ce que** le système est configuré de telle manière que l'unité d'émetteur du premier type (6) est éteinte de nouveau après la transmission des informations concernant les mouvements détectés stockées dans la mémoire (4) et/ou du code de réponse.

21. Système selon l'une quelconque des revendications précédentes 17-20, **caractérisé en ce que** le système est configuré pour effacer les informations sur les mouvements détectés stockées dans la mémoire (4) après que cette information a été transmise avec l'unité d'émetteur du premier type un nombre prédéterminé de fois et/ou quand les informations stockées sont plus vieilles qu'une durée de temps prédéterminée.

22. Système selon l'une quelconque des revendications précédentes 17-21, **caractérisé en ce que** le système est configuré de telle manière que le circuit de commande (10) est allumé quand un mouvement est détecté avec le capteur.

23. Système selon la revendication 22, **caractérisé en ce que** le circuit de commande (10) est configuré pour, quand il est activé par le capteur de mouvement (22), stocker des informations sur des mouvements détectés avec le capteur dans la mémoire et/ou transmettre des informations sur des mouvements détectés et/ou des informations sur des mouvements détectés stockées dans la mémoire, avec l'unité d'émetteur du premier type (6).

24. Système selon la revendication 23, **caractérisé en ce que** le système est configuré de telle manière que le circuit de commande (10) est éteint de nouveau quand plus aucun mouvement n'est détecté avec le capteur de mouvement.

25. Système selon l'une quelconque des revendications précédentes, **caractérisé en ce que** l'unité d'identification (2) inclut une batterie (24) pour l'alimentation en énergie du circuit de commande (10) et de l'unité d'émetteur du premier type (6) et éventuellement du capteur de la revendication 15.

26. Système selon l'une quelconque des revendications précédentes, **caractérisé en ce que** l'unité d'émetteur du premier type (6) et l'unité de récepteur du second type (18) sont configurées pour communiquer ensemble sur une distance qui est supérieure à la distance sur laquelle l'au moins une unité de lecteur et l'unité de récepteur du premier type sont configurées pour communiquer ensemble.

27. Système selon l'une quelconque des revendications précédentes, **caractérisé en ce que** la mémoire (4) est mise en oeuvre comme une mémoire flash ou un CMOS.

28. Système selon l'une quelconque des revendications précédentes, **caractérisé en ce que** l'unité d'identification (2) est configurée pour transmettre, en option conjointement avec le code de réponse, un code d'identification stocké dans la mémoire (4) et/ou dans l'unité de récepteur (8) du premier type, avec l'unité d'émetteur du premier type (6).

29. Système selon l'une quelconque des revendications précédentes, **caractérisé en ce que** l'unité d'identification (2) est configurée pour moduler le champ d'interrogation avec des informations, comme un code d'identification de l'unité d'identification, alors que l'au moins une unité de lecteur est configurée pour recevoir ces informations.

30. Système selon l'une quelconque des revendications précédentes, **caractérisé en ce que** le système (1) inclut une unité d'émetteur d'un troisième type (40) pour émettre une onde radio avec des informations, alors que l'unité d'identification inclut une unité de récepteur d'un troisième type (42) pour recevoir des informations transmisses avec l'unité d'émetteur d'un troisième type.

31. Système selon la revendication 30, **caractérisé en ce que** les informations sont modulées par l'unité d'émetteur du troisième type (40) sur une porteuse du signal radio qui est émis par l'unité d'émetteur du troisième type.

32. Système selon la revendication 30 ou 31 et selon la revendication 29, **caractérisé en ce que** l'unité d'identification (2) est configurée pour moduler le champ d'interrogation avec l'aide de l'unité de récepteur du premier type (8) avec des informations en réponse aux informations qui ont été reçues avec l'unité de récepteur du troisième type (42) et qui viennent de l'unité d'émetteur du troisième type (44).

33. Système selon la revendication 32, **caractérisé en ce que** l'unité d'identification (2) module le champ d'interrogation avec des informations qui sont basées sur les informations reçues avec l'unité de récepteur du troisième type (42) et/ou qui comprennent les informations reçues avec l'unité de récepteur du troisième type.

34. Système selon l'une quelconque des revendications 1-29, **caractérisé en ce que** l'onde radio a une fréquence de porteuse de 300 MHz - 5 GHz, plus préférablement une fréquence de porteuse de 1,5 - 3 GHz et/ou **en ce que** la fréquence de porteuse de la porteuse est dans la bande UHF.

35. Système selon l'une quelconque des revendications 30-33, **caractérisé en ce que** l'onde radio a une fréquence de porteuse de 300 MHz - 5 GHz, plus préférablement une fréquence de porteuse de 1,5 - 3 GHz et/ou **en ce que** la fréquence de porteuse de la porteuse est dans la bande UHF.

36. Système selon l'une quelconque des revendications précédentes, **caractérisé en ce que** le champ d'interrogation a une fréquence de porteuse de 10 kHz - 300 MHz
